# FASCICULE DE BREVET EUROPEEN

(11) **EP 2 156 597 B1**
(45) Date de publication et mention de la délivrance du brevet: **03.10.2018**
(21) Numéro de dépôt: 08760018.5
(22) Date de dépôt: 26.05.2008
(51) Int. Cl.: H04L 1/06, H04L 1/16, H04L 1/18, H04L 12/28, H04W 88/08, H04L 1/00

(54) **PROCEDE DE RECEPTION DE PAQUETS DE DONNEES ET PROCEDE DE TRANSMISSION CORRESPONDANT**
VERFAHREN ZUM EMPFANG VON DATENPAKETEN UND ENTSPRECHENDES ÜBERTRAGUNGSVERFAHREN
METHOD OF RECEIVING DATA PACKETS AND CORRESPONDING METHOD OF TRANSMISSION

(30) Priorité: 24.05.2007 FR 0755233
(43) Date de publication de la demande: 24.02.2010
(73) Titulaire: Thomson Licensing, 92130 Issy-les-Moulineaux (FR)
(72) Inventeur: FONTAINE, Patrick, F-35200 Rennes (FR); GUGUEN, Charline, F-35700 Rennes (FR); DORE, Renaud, F-35000 Rennes (FR)
(74) Mandataire: Le Dantec, Claude
(86) Numéro de dépôt international: PCT/EP2008/056419
(87) Numéro de publication internationale: WO 2008/142168

(56) Documents cités:
- EP-A- 1 056 258
- WO-A-02/056534
- WO-A-2005/008947
- DE-A1- 10 227 852
- US-A1- 2001 012 279
- G.P. KOUDOURIDIS, R. AGÜERO, E. ALEXANDRI, J. CHOQUE, K. DIMOU, H.R. KARIMI, H. LEDERER, J. SACHS, R. SIGLE: "Generic Link Layer Functionality for Multi-Radio Access Networks" EURASIP, 24 janvier 2006 (2006-01-24), XP002489185 Extrait de l'Internet: URL:http://www.eurasip.org/Proceedings/Ext /IST05/papers/359.pdf>

## Description

### 1. Domaine de l'invention.

La présente invention concerne le domaine des télécommunications sans fil et plus précisément la transmission de données, fiable à une station de base via deux stations clientes (ou stations distantes).

### 2. Arrière-plan technologique.

Selon l'état de l'art, plusieurs architectures de réseaux sans fil sont connues.

Certaines d'entre elles sont basées sur une architecture centralisées. Ainsi, le système Wifi (basée sur la norme IEEE 802.11a) a une architecture avec ordonnancement (ou « scheduling » en anglais) non centralisé avec un accès au canal (ou « Channel access » en anglais) à contention. Une telle architecture ne permet pas de gérer efficacement une qualité de service (ou QoS de l'anglais « Quality of Service ») suffisante pour certaines applications.

Selon le document de brevet WO02/056534 de l'état de l'art et intitulé « Automatic Répétition Request mecanism in a radio access network » (ou « Mécanisme à requête de répétition automatique dans un réseau d'accès radio » en français), une passerelle (ou « gateway » en anglais, des SDUs (« Service Data Unit ») sont segmentés en PDUs et transmis à des stations de bases fixes ; les stations de bases fixes transmettent les PDUs à des stations mobiles en mettant en oeuvre un système d'ARQ (« Automatic Répétition Request »). Ce système présente l'inconvénient d'être mal adapté à des équipements standards, les passerelles étant spécifiques.

Le document de brevet WO2005/008947 intitulé « Packet retransmission for MIMO systems using multipath transmission » (ou « Retransmission de paquets pour des systèmes MIMO utilisant une transmission à chemins multiples » en français) divulgue un réseau avec des répéteurs multiples et utilisant des non acquittements ou NACK. Ce système présente l'inconvénient de ne pas fiabiliser suffisamment les communications.

d'une qualité de service plus appropriée pour certaines applications (temps maximum de délivrance d'un paquet (typiquement 5 ms) et bande passante garantie pour chaque demande de connexion).

Néanmoins, les techniques mises en oeuvre dans les réseaux Wimax ne permettent pas de garantir une qualité de services pour toutes les applications, par exemple pour des communications de type vidéo, des données étant reçues par des caméras sans fil se déplaçant dans des milieux radio-fréquences bruités, sujets à des interférences ou perturbés par des obstacles engendrant des pertes de signaux ou des échos. Ainsi, une communication avec une station sans fil peut être coupée inopinément (par exemple, lorsque la station mobile se déplace). En effet, le maintien ou la couverture d'une liaison sans fil ne peut être garantie, ce qui peut poser des problèmes de réception lorsqu'une station ou son environnement bouge.

L'article "Generic Link Layer Functionality for Multi-Radio Access Networks", publié le 24 janvier 2006 par G.P. Koudouridis et al. décrit une couche de liaison générique qui fait correspondre des demandes de service à des réseaux d'accès radio hétérogènes à tout instant.

EP 1 056 258 A, publié le 29 novembre 2000, décrit une méthode de transmission de données selon laquelle des unités de données selon un premier protocole mettant en oeuvre un ARQ encapsulent des unités de données selon un deuxième protocole appartenant à une couche supérieure, qui typiquement ne met pas en oeuvre d'ARQ.

### 3. Résumé de l'invention.

L'invention a pour but de pallier ces inconvénients de l'art antérieur.

Plus particulièrement, l'invention a pour objectif de permettre la réception de données par au moins une station sans fil en provenance de stations relais, avec une qualité de service garantie et plus précisément avec une absence de coupure de la communication (c'est-à-dire sans perte de paquets devant être reçus par la ou les stations sans fil) dans des conditions normales d'utilisation.

L'invention concerne un procédé étant mis en oeuvre dans une première station, chaque paquet de données (PDU) étant transmis par au moins deux deuxièmes à destination de la première station, les deuxièmes stations appartenant à un ensemble comprenant plusieurs deuxièmes stations. Afin de garantir la qualité de service dans des conditions normales d'utilisation, le procédé comprend une transmission d'au moins un acquittement de chaque paquet de données, le paquet étant reçu au moins une fois correctement, le ou les acquittements étant transmis à chaque deuxième station ; avantageusement, les paquets de données sont issus d'au moins un paquet d'unité de service (SDU), la découpe de paquet de service et la numérotation du ou des paquets de données par chacune des deuxièmes stations étant identiques.

Les paquets de données ou PDU correspondent à une couche courante et les paquets d'unité de service ou SDU correspondent à des paquets d'une couche supérieure à la couche courante.

Ainsi, les paquets de données sont préparés et transmis en parallèle par plusieurs deuxième stations, ce qui fiabilise la réception de ces données par la première station. En outre, les SDU étant préparés par les deuxièmes stations, les équipements sources ou intermédiaires peuvent être des équipements standards.

Selon une caractéristique particulière, le procédé comprend une requête de retransmission d'au moins un paquet de données à au moins une et, avantageusement à chacune, des deuxièmes stations, lorsque le ou les paquets de données n'ont pas été reçus correctement.

Selon une autre caractéristique, le ou les paquets de données sont dans la couche de communication contrôle d'accès au médium appelée couche MAC.

Avantageusement, le procédé comprend une étape d'assemblage de plusieurs paquets reçus en un paquet d'unité de service ou paquet applicatif.

Selon une caractéristique spécifique, les paquets de données reçus proviennent d'au moins deux deuxièmes stations distinctes.

Avantageusement, chaque paquet de données est transmis à destination de la première station par chacune des deuxièmes stations.

Selon une caractéristique particulière, chaque paquet est transmis sur une liaison sans fil entre les deuxièmes stations et la première station, par exemple suivant un protocole IEEE 802.16.

Selon une caractéristique avantageuse, le procédé comprend une transmission à un appareil d'au moins un paquet de service comprenant les données correspondant à au moins un paquet de données reçu, ledit au moins un paquet de service comprenant des informations de contrôle dudit appareil.

Selon une autre caractéristique avantageuse, le procédé comprend une transmission à un appareil d'au moins un paquet de service comprenant les données correspondant à au moins un paquet de données reçu, l'appareil étant adapté à capturer de données audiovisuelles.

L'invention concerne également un procédé de transmission de paquets de données vers une première station, le procédé étant mis en oeuvre dans une deuxième station, chaque paquet étant transmis par au moins deux deuxièmes stations à destination d'une première station. Afin de garantir la qualité de service dans des conditions normales d'utilisation, le procédé comprend :
- une découpe d'au moins un paquet d'unité de données de service (SDU) en au moins un paquet de données (PDU) par au moins deux deuxièmes stations, la découpe et la numérotation du ou des paquets de données étant identiques dans chacune des deuxièmes stations ;
- une transmission du ou des paquets de données à destination de la première station ; et
- une réception d'un premier acquittement d'au moins un paquet de données transmis, l'acquittement étant transmis par la première station.

Ainsi, la réception du premier acquittement permet à chaque deuxième station ayant reçu cet acquittement d'éliminer le paquet de données correspondant, même si la première station a reçu ce paquet de données d'une autre deuxième station.

De plus, la synchronisation entre les deuxièmes stations est maintenue, même si le paquet n'est pas transmis (par exemple) si les buffers de la deuxième station recevant les paquets et mettant en oeuvre le procédé sont pleins.
Selon une caractéristique particulière, au moins une des deuxièmes stations transmet un deuxième acquittement correspondant au premier acquittement à chacune des autres deuxièmes stations.

Ainsi, lorsque la liaison entre une deuxième station et la première station n'est pas fiable, la deuxième station recevant un deuxième acquittement n'a pas besoin de retransmettre le paquet de données acquitté.

L'invention concerne aussi, un système de réception de paquets de données, le système comprenant une première station, chaque paquet étant transmis par au moins deux deuxièmes stations à destination de la première station, les deuxièmes stations appartenant à un ensemble comprenant plusieurs deuxièmes stations. Le système comprend des moyens de transmission d'au moins un acquittement de chaque paquet reçu au moins une fois correctement, le ou les acquittements étant transmis à chaque deuxième station de l'ensemble.

Avantageusement, le système comprend un appareil recevant les paquets via la première station. L'appareil et la première station peuvent être dans des équipements séparés ou dans un même équipement.

Selon une caractéristique particulière, au moins une partie des paquets comprend des informations de contrôle de l'appareil.

Selon une caractéristique particulière, l'appareil est adapté à capturer de données audiovisuelles.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un exemple d'architecture de réseau de communication avec des éléments mettant en oeuvre l'invention ;
- les figures 2 et 3 présentent schématiquement, respectivement une station sans fil mobile et une station relais appartenant au réseau de la figure 1, selon un mode particulier de réalisation de l'invention ;
- les figures 4 et 5 présentent un procédé mis en oeuvre dans la station sans fil de la figure 2, selon des modes particuliers de réalisation de l'invention ;
- les figures 6 et 7 présentent un procédé mis en oeuvre dans la station relais de la figure 3, selon des modes particuliers de réalisation de l'invention ;
- la figure 8 illustre un exemple de communication entre différents éléments du réseau de la figure 1 ; et
- la figure 9 donne un exemple de trames échangées par des éléments du réseau de la figure 1.

### 5. Description détaillée de l'invention.

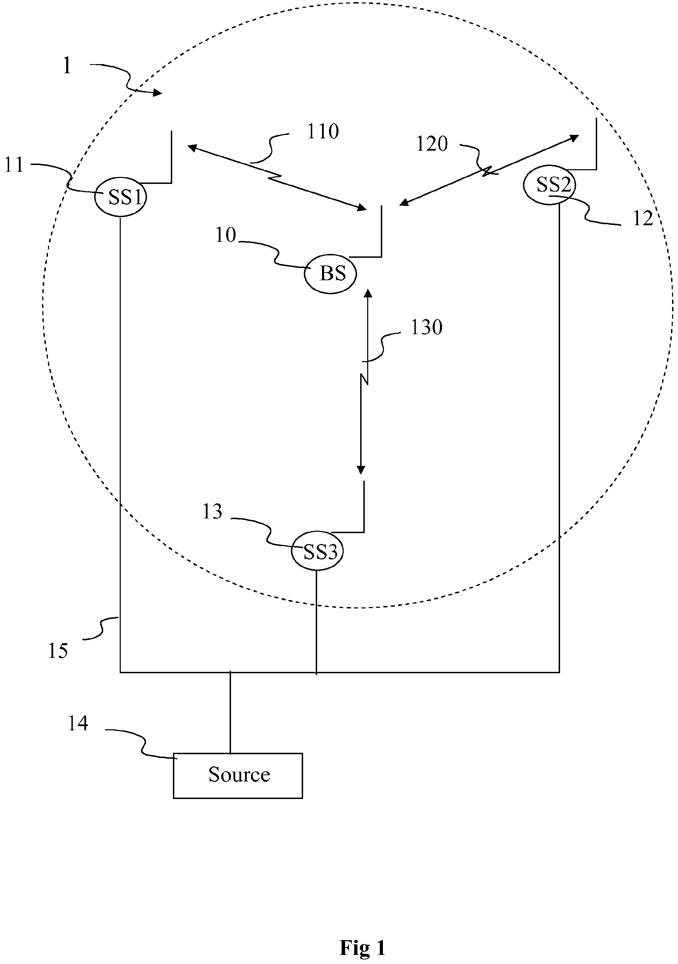

La **figure 1** représente un réseau de communication comprenant un réseau sans fil 1 et un réseau Ethernet filaire (ou IEEE 802.3).

Le réseau sans fil 1 comprend une ou plusieurs premières stations sans fil, fixes ou, avantageusement mobiles. Une station sans fil est par exemple une station de base (ou BS de l'anglais « Base Station ») BS 10. S'il y a plusieurs stations de base, elles utilisent des canaux physiques différents (par exemple, canaux fréquentiels ou CDMA (de l'anglais « Code Division Multiple Access » ou « Access multiple par Répartition par Code», allocations temporelles (TDMA de l'anglais « Time Division Multiple Access » ou « Access multiple par Répartition dans le Temps »).

Le réseau Ethernet comprend un noeud source 14.

La station de base 10 peut transmettre ou recevoir des données à destination (par exemple des images) ou en provenance (par exemple, des données de contrôle) du noeud 14 via des stations relais ou stations clientes (ou SS de l'anglais « Subscriber Stations » ou stations distantes ou RS de l'anglais « Remote Stations ») SS1 11, SS2 12 et SS3 13 (deuxièmes stations du réseau sans fil). Les stations clientes 11 à 13 permettent d'assurer l'interface entre le réseau sans fil 1 et le réseau Ethernet. Ainsi, la station cliente 11 (respectivement 12, 13) est reliée via une liaison sans fil bidirectionnelle 110 (respectivement 120,130) à la station de base 10. L'architecture du réseau 1 est telle que le réseau 1 comprend suffisamment de stations clientes pour couvrir toute la zone où sont susceptibles de se trouver la ou les stations de base. Ainsi, à tout moment, chaque station de base du réseau 1 est reliée à au moins une station cliente par une liaison sans fil permettant d'assurer une communication sans fil. Les stations clientes 11 à 13 sont reliées directement ou via un hub par une liaison Ethernet 15 (ou tout autre réseau permettant la transmission et la réception de données) au noeud 14. Selon une variante de réalisation, elles sont également reliées entre elles via une liaison Ethernet (ou tout autre type de liaison filaire ou sans fil). Ainsi, par exemple, si la station de base 10 est connectée à la station cliente SS1 11, elle peut recevoir des données transmises par le noeud 14 via les liaisons 15 et 110.

La ou les stations de base sont par exemple des caméras mobiles, équipées de moyens de communications sans fil et le noeud 14 est un système de traitement d'images (par exemple, un enregistreur vidéo, un point d'entrée de studio, ...). Ainsi, le réseau de la figure 1 permet une transmission continue (c'est-à-dire sans interruption) de données de contrôle par un système de traitement vers des caméras situées à l'intérieur ou à l'extérieur de bâtiments pour retransmettre un événement quelconque (par exemple un événement sportif ou un spectacle) sur une zone géographique également quelconque. La station de base peut comprendre ou être associée au sein d'un système de réception de paquets de données à un appareil est adapté à capturer de données audiovisuelles (par exemple caméra), la station de base transmettant les paquets reçus à l'appareil. Ces paquets comprennent, par exemple, des informations de contrôle de l'appareil

Avantageusement, les stations clientes partagent un même canal de fréquences radio, le spectre radio étant une ressource à économiser. Les stations clientes peuvent éventuellement s'écouter mutuellement sur le canal radio. Selon une variante de réalisation, les stations clientes ne peuvent pas mutuellement s'écouter sur le canal radio.

Avantageusement, les communications mises en oeuvre entre les noeuds du réseau de la figure 1 sont du type IP (de l'anglais « Internet Protocol » ou « protocole internet »), les SS, les BS et le noeud 14 possédant chacun une adresse IP. IP est utilisé pour transporter du flux en mode continu (« streaming » en anglais) par exemple pour du transport video et/ou audio, en mode unidirectionnel ou bidirectionnel.

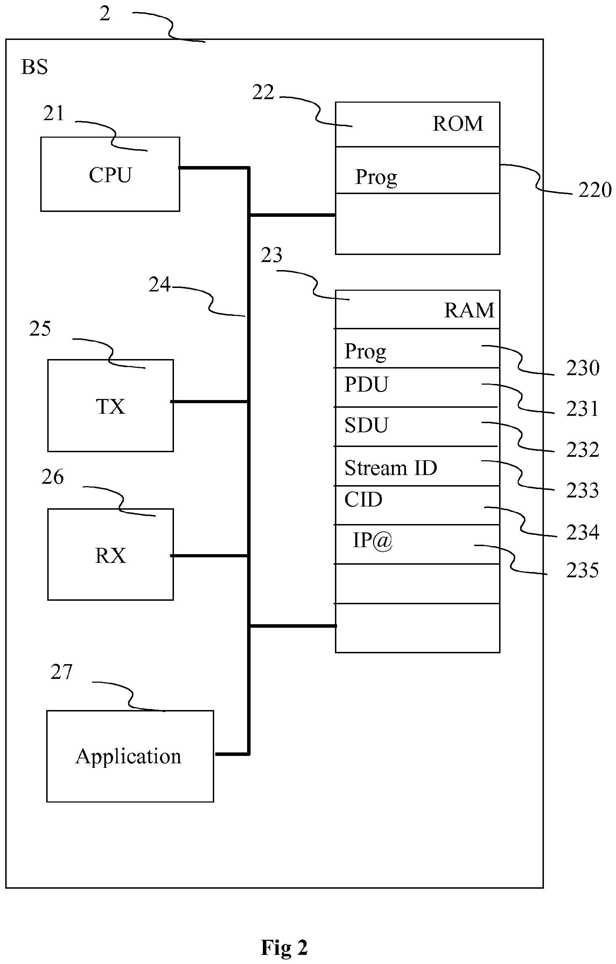

La **figure 2** illustre schématiquement une station mobile 2 du réseau 1 correspondant à la station de base 10.

La station mobile 2 comprend, reliés entre eux par un bus 24 d'adresses et de données, transportant également un signal d'horloge :
- un microprocesseur 21 (ou CPU) ;
- une mémoire non volatile de type ROM (de l'anglais « Read Only Memory ») 22 ;
- une mémoire vive ou RAM (de l'anglais « Random Access Memory ») 23 ;
- un module 25 de transmission d'un signal sur le lien sans fil ;
- un module 26 de réception d'un signal sur le lien sans fil ; et
- une interface 27 vers une application.

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives d'un service audio/vidéo reçu).

L'application est, par exemple, du type vidéo et constitue respectivement la source et la destination des données respectivement transmises et reçues par la station mobile 2 (La station mobile 2 est par exemple une caméra ou un système radio associé à une caméra).

La mémoire ROM 22 comprend notamment un programme « prog » 220 .

Les algorithmes mettant en oeuvre les étapes du procédé propre à l'invention et décrits ci-après sont stockés dans la mémoire ROM 22 associée à la station mobile 2 mettant en oeuvre ces étapes. A la mise sous tension, le microprocesseur 21 charge et exécute les instructions de ces algorithmes.

La mémoire vive 23 comprend notamment :
- dans un registre 230, le programme de fonctionnement du microprocesseur 21 chargé à la mise sous tension de la station mobile 2 ;
- des données ou des PDU (de l'anglais « Packet Data Unit » correspondant à des paquets de données de niveau 2 ou MAC (de l'anglais « Médium Access Control » ou « Control d'accès au médium »)) contenant ces données dans un registre 231 ;
- des paquets de données de type SDU (de l'anglais « Service Data Unit » ou « Unité de Données de Service ») pouvant contenir plusieurs PDU dans un registre 232
- un identifiant de flux SID (de l'anglais « Stream Id ») dans un registre 233, l'identifiant SID permettant de faire de la classification (fonction « classifier » selon la norme IEEE 802.16) ;
- un ou plusieurs identifiants de connexion ou CID (de l'anglais « Connection identifier ») dans un registre 234 ; et
- une adresse IP de la station mobile 2 dans un registre 235.

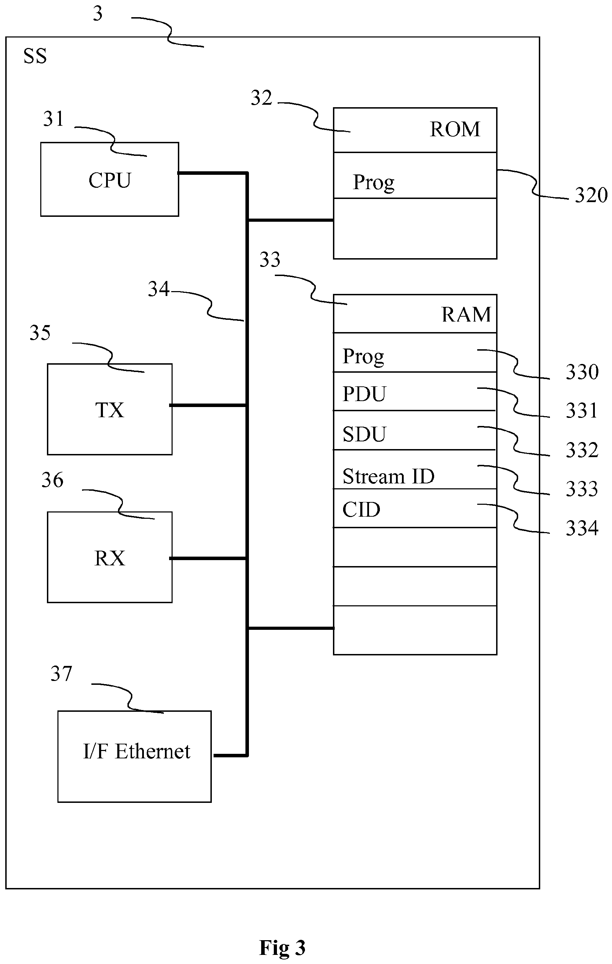

La **figure 3** illustre schématiquement une station cliente 3 du réseau 1 correspondant à SS1, SS2 ou SS3.

La station cliente 3 comprend, reliés entre eux par un bus 34 d'adresses et de données, transportant également un signal d'horloge :
- un microprocesseur 31 (ou CPU) ;
- une mémoire non volatile de type ROM (de l'anglais « Read Only Memory ») 32 ;
- une mémoire vive ou RAM (de l'anglais « Random Access Memory ») 33 ;
- un module 35 de transmission d'un signal sur le lien sans fil ;
- un module 36 de réception d'un signal sur le lien sans fil ; et
- une interface 37 vers un réseau Ethernet.

On observe que le mot « registre » utilisé dans la description des mémoires 32 et 33 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives d'un service audio/vidéo reçu).

La mémoire ROM 32 comprend notamment un programme « prog » 320 .

Les algorithmes mettant en oeuvre les étapes du procédé propre à l'invention et décrits ci-après sont stockés dans la mémoire ROM 32 associée à la station de cliente 3 mettant en oeuvre ces étapes. A la mise sous tension, le microprocesseur 31 charge et exécute les instructions de ces algorithmes.

La mémoire vive 33 comprend notamment :
- dans un registre 330, le programme de fonctionnement du microprocesseur 31 chargé à la mise sous tension de la station cliente 3 ;
- des données ou des PDU contenant ces données dans un registre 331 ;
- des paquets de données de type SDU (de l'anglais « Service Data Unit » ou « unité de données de service ») pouvant contenir plusieurs PDU dans un registre 332
- un identifiant de flux dans un registre 233 ;
- un identifiant de connexion ou CID dans un registre 234 ; et
- une adresse IP de la station mobile 2 dans un registre 235.

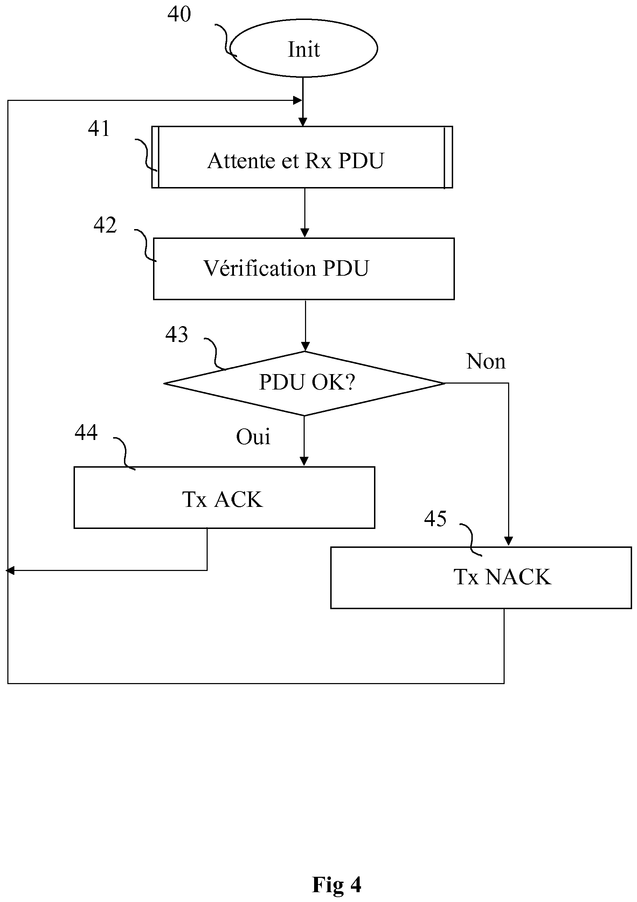

La **figure 4** présente un procédé mis en oeuvre dans la station sans fil 2 selon une mise en oeuvre particulière de l'invention.

Ce procédé commence par une phase d'initialisation 40 au cours de laquelle les différents paramètres de la station 2 sont mis à jour.

Puis, au cours d'une étape 41, la station 2 attend puis reçoit au moins un PDU en provenance d'une ou de plusieurs stations clientes 11 à 13, chaque station cliente transmettant un PDU avec les mêmes données utiles pour l'application.

Ensuite, au cours d'une étape 42, la station 2 vérifie que le PDU transmis par chacune des stations clientes 11 à 13 est correctement reçu (par exemple, en vérifiant un code de détection d'erreur présent dans le PDU reçu).

Puis, au cours d'un test 43, la station 2 vérifie qu'au moins un des PDU transmis par les stations clientes a été bien reçu.

Dans l'affirmative, la station 2 transmet un acquittement positif ou ACK (de l'anglais « acknowledge ») de niveau 2 (couche MAC) indiquant un PDU bien reçu, à chacune des stations clientes 11 à 13, le PDU correspondant est transmis à l'application et l'étape 41 est réitérée. Si un même PDU transmis par au moins deux stations clientes différentes est correctement reçu, il peut être dupliqué et, avantageusement, le PDU est transmis une seule fois à l'application.

Si pour un PDU donné, la station 2 ne reçoit pas correctement de PDU correspondant transmis par les stations clientes, la station 2 transmet un acquittement négatif ou NACK (de l'anglais « negative-acknowledgement ») identifiant le PDU mal reçu, à chacune des stations clientes 11 à 13. L'étape 41 est alors réitérée.

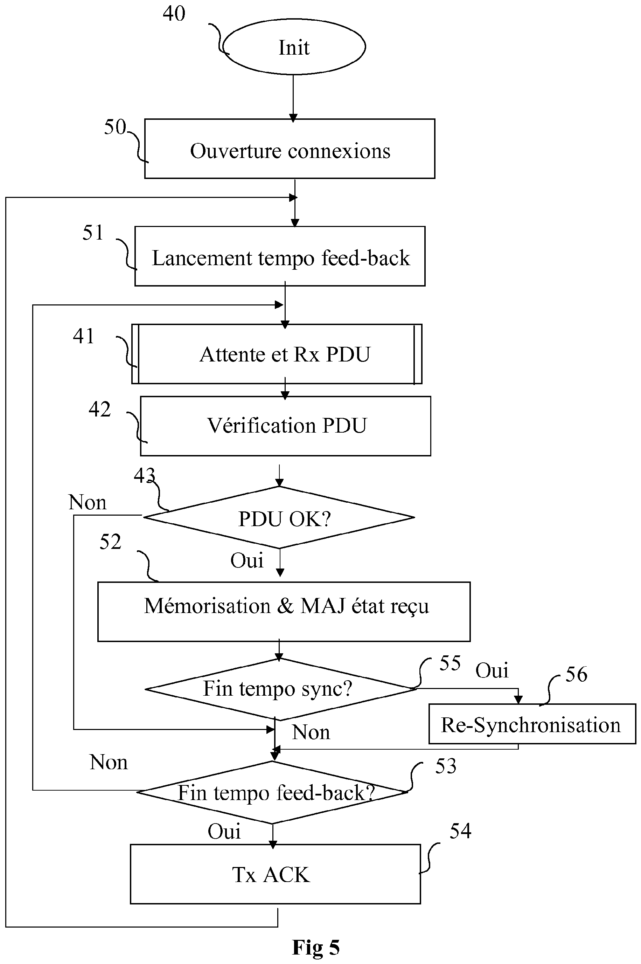

La **figure 5** présente un procédé mis en oeuvre dans la station sans fil 2 selon une mise en oeuvre particulièrement avantageuse de l'invention, dans le cadre d'un réseau sans fil comprenant notamment les stations clientes 11 à 13 standards, compatibles avec la norme IEEE 802.16. Les étapes communes avec le procédé illustré en figure 4 portent les mêmes références et ne sont pas décrites davantage.

Après une étape d'initialisation 40, au cours d'une étape 50 le station 2 ouvre une connexion associée à chaque station cliente 11 à 13. Trois connexions (une connexion par station cliente) sont ainsi créées avec les mêmes paramètres (par exemple, le débit, la latence, paramètres d'ARQ et paramètres de classification (SID)) mais avec des identifiants CID (de l'anglais « Connection IDentifier » ou identifiant de connexion) différents. Cela permet un fonctionnement avec des stations clientes standards, la station de base étant adaptée à la mise en oeuvre de l'invention. Ainsi, chaque SS du réseau 1 est connectée à la BS.

Selon une variante, la station 2 gère des connexions associées à plusieurs flux, ces flux pouvant correspondre à des types de données différentes et/ou à des sources distinctes. Chacun des flux est identifié par un SID qui lui est propre et transmis sur des connexions propres (deux connexions sur deux flux distincts sont différenciées).

A l'issue de cette étape, chaque SS peut transmettre des PDU à la BS avec une numérotation sensiblement synchrone. Lors de la première transmission, le numéro du premier PDU par chacune des SS est le même. Chaque SS est configurée pour découper les SDU en PDU et numéroter les PDU de la même manière (par exemple même taille de PDU et même numéro de départ). Si une SS entre ultérieurement dans le réseau 1, le réseau est réinitialisé (arrêt du flux, vidange (ou « flush » en anglais) des tampons mémoires (ou « buffers »), réinitialisation des connexions, puis redémarrage de flux) ; une connexion sera aussi ouverte pour cette SS avec une initialisation des numéros de PDU en phase avec la numérotation courante des PDU transmis par les autres SS. Selon une variante, lorsque une SS entre ultérieurement dans le réseau 1, un mécanisme de synchronisation entre SS permet une numérotation identique des PDUs transmis par les SS avec les SSs déjà connectées. Par exemple, on vide les buffers des SSs en ne transmettant pas les nouveaux SDUs arrivant pendant la resynchronisation et en reprenant la numérotation de manière synchrone (ordre ou message de synchronisation transmis par la BS ou échangé sur le lien filaire) sur le premier SDU arrivant après cet ordre. Avantageusement, le procédé mis en oeuvre par la BS comprend une détection d'une perte de synchronisation dans la numérotation des PDUs reçus ; selon cette variante, la BS vérifie systématiquement, aléatoirement, périodiquement ou suite à un événement quelconque, si deux paquets de données transmis par deux SS et portant le même numéro comporte le même contenu. Dans la négative, une erreur est détectée, et la BS transmet un message de resynchronisation de la numérotation des paquets directement aux SSs ou à un équipement de contrôle du réseau.

Puis, au cours d'une étape 51, une temporisation de feed-back est lancée.

Ensuite, les étapes 41 de réception de PDU, 42 de vérification et 43 de test sont effectuées.

Dans l'affirmative, au cours d'une étape 52, chaque PDU bien reçu est mémorisé, transmis à l'application et l'état du PDU correspondant dans le descripteur de PDU est mis à jour (l'état passe de « non reçu » à « reçu »). Si un même PDU est reçu plusieurs fois de manière correcte, les doublons sont éliminés. Avantageusement, les PDU sont transmis à l'application après assemblage (reconstruction) d'un SDU complet comprenant les PDU correspondants. Selon l'invention, un SDU peut être construit avec des PDU en provenance de SS différentes.

Selon un mode particulier de réalisation, on met en oeuvre des temporisations de synchronisation pour chaque connexion et pour chaque connexion, une fenêtre de réception ARQ qui définit le premier PDU non correctement reçu. Pour une connexion donnée, si le premier PDU non correctement reçu change, alors on réinitialise la temporisation de synchronisation associée à cette connexion.

Ensuite, au cours d'un test 55, on vérifie pour chaque connexion que la temporisation de synchronisation a atteint une valeur limite déterminée (par exemple 100 ms).

Dans l'affirmative (valeur limite de temporisation atteinte), au cours d'une étape 56, la station 2 transmet à la SS correspondante un ordre de resynchronisation avec le premier numéro de PDU non reçu. Cela permet à la SS correspondante de transmettre à nouveau les PDUs de manière sensiblement synchrone avec les autres SSs, et d'avoir une fenêtre d'émission ARQ de la SS synchrone avec la fenêtre de réception ARQ associée à la SS dans la BS.

Selon une variante, la station 2 ne met pas en oeuvre les temporisations de synchronisation et donc le test 55 et l'étape 56.

Suite à un résultat du test 55 négatif (valeur limite de temporisation non atteinte), de l'étape 56 ou à résultat du test 43 négatif, au cours d'un test 53, le CPU 21 vérifie si la temporisation de feed-back lancée à l'étape 51 est écoulée. La valeur maximale est par exemple comprise entre 2 et 10 ms. Dans la négative, l'étape 41 est réitérée. Selon une variante, un test de mémoire pleine et/ou vérifiant si le nombre de PDU identiques reçus correspond au nombre de SS peut remplacer ou être ajouté au test 53. Avantageusement, la nature du test 53 dépend de l'application : par exemple pour une transmission de fichier, un test de mémoire pleine pourra être avantageusement mis en oeuvre ; pour une transmission de vidéo, une temporisation adaptée pourra être implémentée.

Si le résultat du test 53 est positif, la temporisation est écoulée et une procédure d'acquittement (ACK) et/ou de demande de répétition automatique (ou ARQ de l'anglais « Automatic Retransmission Request ») est mise en oeuvre. Selon l'invention, au cours d'une étape 54, si un PDU transmis par les SS est bien reçu, alors la station 2 transmet un acquittement positif ou ACK à toutes les SS (un même PDU est transmis par toutes les SS ; l'ACK est transmis dès qu'au moins un PDU transmis par une SS est bien reçu par la BS). Il s'agit d'une différence essentielle avec les mises en oeuvre de réseaux IEEE802.16 selon l'état de l'art qui ne prévoient pas de telles procédures, une seule connexion étant alors utilisée en transmission vers un seul destinataire (il n'y a pas de transmission vers plusieurs destinataires (« multicast » en anglais) avec ARQ). Selon une variante de l'invention, si la station 2 ne reçoit correctement aucun paquet correspondant à un même PDU transmis par toutes les SS alors la station 2 transmet un acquittement négatif ou NACK. Un acquittement ACK associé à un PDU identifié par son numéro correspond donc à un « OU » logique de l'état de réception de chaque PDU portant le même numéro d'identification et transmis par les SS. Les retours (ou « feedback » en anglais) d'acquittement sont transmis vers toutes les SS en étant dupliqués pour chaque connexion (c'est-à-dire avec les CIDs correspondants). Selon le mode de réalisation décrit ici, l'acquittement est sélectif. Selon une variante, l'acquittement est cumulatif : plusieurs acquittements correspondant à des PDUs consécutifs sont cumulés ; un acquittement correspondant au dernier des PDUs consécutifs bien reçus est transmis à toutes les SSs. Selon une autre variante, les acquittements sont à la fois cumulatifs et sélectifs : la BS indique le dernier PDU bien reçu d'une séquence de PDU bien reçus et les PDU isolés bien reçus après le dernier PDU bien reçu en cumulatif.

Selon une variante, le test 53 et l'étape 54 sont effectuées en parallèles de l'étape 41 (par exemple dans un environnement multitâche).

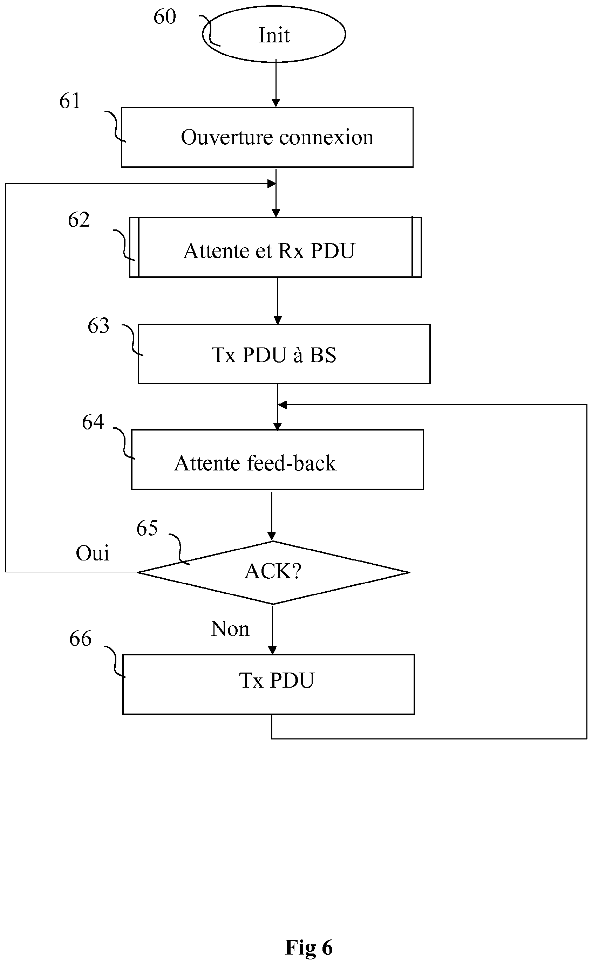

La **figure 6** présente un procédé mis en oeuvre dans la station 3 selon une mise en oeuvre particulière de l'invention.

Ce procédé commence par une phase d'initialisation 60 au cours de laquelle les différents paramètres de la station 3 sont mis à jour.

Puis, au cours d'une étape 61, une connexion est ouverte avec la station de base.

Puis, au cours d'une étape 62, la station 3 attend puis reçoit au moins un PDU en provenance de la source 14. La source 14 transmet à toutes les SSs, le PDU à transmettre à la station de base.

Ensuite, au cours d'une étape 63, la station 3 numérote chaque PDU et les transmet en une ou plusieurs salves (ou « bursts » en anglais) vers la station de base.

Puis, au cours d'une étape 64, la station 3 attend un retour de la station de base. Selon une variante, l'attente est limitée par une temporisation lancée lors de l'étape 63.

Ensuite, au cours d'un test 65, la station 3 vérifie si un acquittement positif a été reçu. Dans l'affirmative, l'étape 62 est réitérée.

Dans la négative (aucun acquittement positif n'a été reçu ou un acquittement négatif a été reçu), au cours d'une étape 66 le ou les PDUs non acquittés sont retransmis à la BS et l'étape 64 est réitérée.

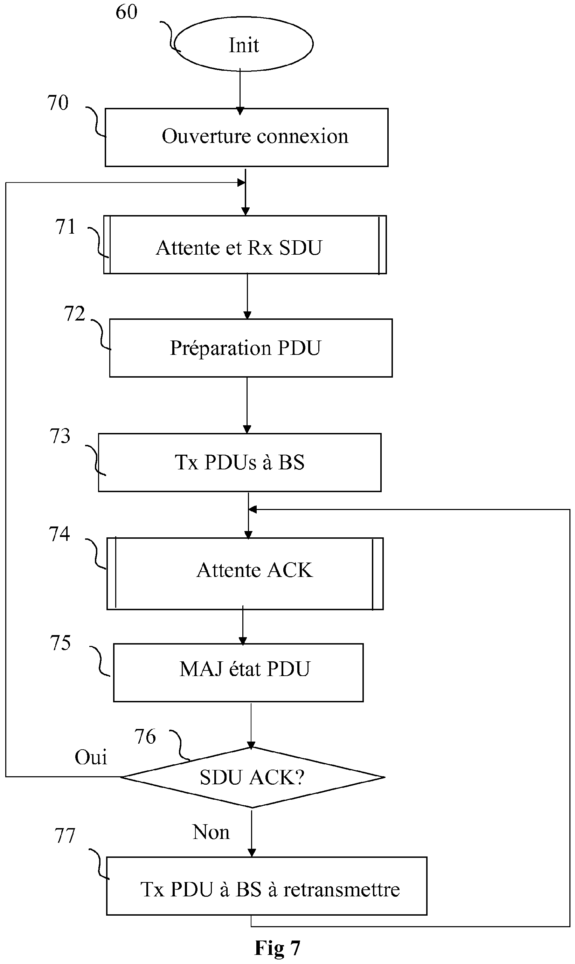

La **figure 7** présente un procédé mis en oeuvre dans la station sans fil 3 selon une mise en oeuvre particulièrement avantageuse de l'invention, dans le cadre d'un réseau sans fil comprenant notamment des stations clientes 11 à 13 compatibles avec la norme IEEE 802.16. Les étapes communes avec le procédé illustré en figure 7 portent les mêmes références et ne sont pas décrites davantage.

Après une étape d'initialisation 60, au cours d'une étape 70, une connexion est ouverte avec la station de base. Un CID est associé à chaque connexion montante ou descendante entre une SS et une BS. Ainsi, chaque CID identifie précisément une connexion entre une SS et une BS ainsi que le sens descendant ou montant (deux connexions distinctes ont donc un CID différent). Selon une variante, le CID est le même pour le sens montant et le sens descendant.

Puis, au cours d'une étape 71, la station 3 attend puis reçoit au moins un SDU en provenance de la source 14. La source 14 transmet à toutes les SSs le SDU à transmettre à la station de base.

Ensuite, au cours d'une étape de préparation de PDU 72, la station 3 découpe le SDU reçu en PDUs et les numérote pour les identifier. Les SSs découpent et numérotent les PDU de la même façon de sorte que des données identiques transmises par les SSs soient dans des PDUs qui portent les mêmes numéros. Un état du type « non transmis » est associé à chaque PDU. Cette étape est mise en oeuvre à tout moment pour ne pas perdre la synchronisation avec les autres SSs et notamment lorsque le buffer de transmission est plein (dans ce cas, la découpe des nouveaux SDU et la numérotation des PDUs continuent, mais les PDUs ne sont pas mémorisés). Pour que les SS numérotent de manière identique, selon un mode particulier de réalisation, le numéro de départ peut être choisi de manière identique et la découpe des paquets faite de manière également identique (par exemple taille maximale de paquets de données fixe avec PDU comprenant des données correspondant à un seul PDU ou taille de paquets de données PDU fixe avec des PDUs pouvant comprendre des données de deux SDU consécutifs). Ainsi, la numérotation des paquets reste identique pour des SSs distinctes. Ces paramètres de numérotation et de découpe en paquets sont, par exemple, définis à la création d'une connexion par la BS, le choix des paramètres pouvant se faire par une entité quelconque (notamment BS, équipement source, équipement tiers (par exemple, application de contrôle du réseau). Ainsi, l'étape 72 est avantageusement précédée d'une étape de synchronisation entre les SSs pour numéroter les PDU. Cette étape est avantageusement initiale (à la création d'une connexion). Selon une variante, cette étape est répétée sur requête ou périodiquement ou lors d'un événement quelconque (par exemple détection d'une perte de synchronisation par la BS, deux PDUs reçu par la BS ayant le même numéro d'ordre et ne comprenant pas les mêmes données, un message de resynchronisation de numérotation de paquets de données correspondant étant transmis par la BS ou un équipement de contrôle aux SSs) ; la SS met alors en oeuvre une réinitialisation de la numérotation de paquets de données en fonction du message de resynchronisation.

Puis, au cours d'une étape 73, la station 3 transmet les PDUs en une ou plusieurs salves (ou « bursts » en anglais) vers la station de base selon un protocole de communication de type IEEE 802.16. L'état associé à chaque PDU est mis à jour en devenant du type « transmis ».

Ensuite, au cours d'une étape 74, la station 3 attend un acquittement cumulatif et/ou sélectif en provenance de la station de base destinataire des PDUs. Cet acquittement peut-être positif (ACK) ou négatif (NACK). Selon une variante, la station 3 lance une temporisation au cours de l'étape 73 et l'écoulement de cette temporisation correspond à la réception d'un NACK. Au cours de cette étape, la station 3 peut également recevoir un ordre de resynchronisation ; dans ce cas, elle met à jour l'état de tous les PDUs en attente, en les considérant comme acquittés pour vider le buffer correspondant et recommencer à transmettre les PDUs suivants avec un numéro synchronisé avec les autres SSs ; de cette manière, la fenêtre ARQ en transmission est également synchrone de la fenêtre ARQ de réception dans la BS.

Selon un mode particulier de réalisation, la SS met en oeuvre une temporisation de synchronisation pour la connexion associée et une fenêtre de transmission ARQ qui définit le premier PDU non acquitté. Si le premier PDU non acquitté change, alors la SS réinitialise la temporisation de synchronisation associée. Ensuite, la SS vérifie que la temporisation de synchronisation a atteint une valeur limite déterminée (par exemple 100 ms). Dans l'affirmative (valeur limite de temporisation atteinte), la station 3 se met dans l'attente d'un ordre de resynchronisation transmis par la BS (tout en continuant à découper les SDU en PDU et numéroter les PDUs, sans les garder en mémoire, ni les transmettre). La transmission des PDUs reprend après la réception de l'ordre de resynchronisation.

Selon une variante, la station 3 ne met pas en oeuvre les temporisations de synchronisation.

Selon une variante mettant en oeuvre des échanges entre les SS via un canal quelconque (par exemple, via le réseau filaire 15), chaque SS transmet aux autres SS l'état acquitté (positivement) ou non acquitté par réception d'un NACK transmis par la BS (hors écoulement de temporisation, ce dernier pouvant être du à la non réception d'un ACK transmis), des PDUs transmis précédemment. La transmission des acquittements se fait avantageusement sous forme cumulative. Ainsi, selon cette variante, l'étape 74 prend en compte les informations d'acquittement en provenance de la station de base et des autres SSs.

Ensuite, au cours d'une étape 75, la station 3 met à jour l'état des PDUs :
- état « à retransmettre » pour les PDU non acquittés ou acquittés négativement ; et
- état « reçu » pour les PDUs acquittés positivement.

Puis, au cours d'un test 76, la station 3 vérifie si tous les PDUs du ou des SDU reçus sont acquittés. Dans l'affirmative, l'étape 71 est réitérée.

Dans la négative, les PDUs dont l'état est « à retransmettre » sont transmis à nouveau vers la BS et l'étape 74 est réitérée.

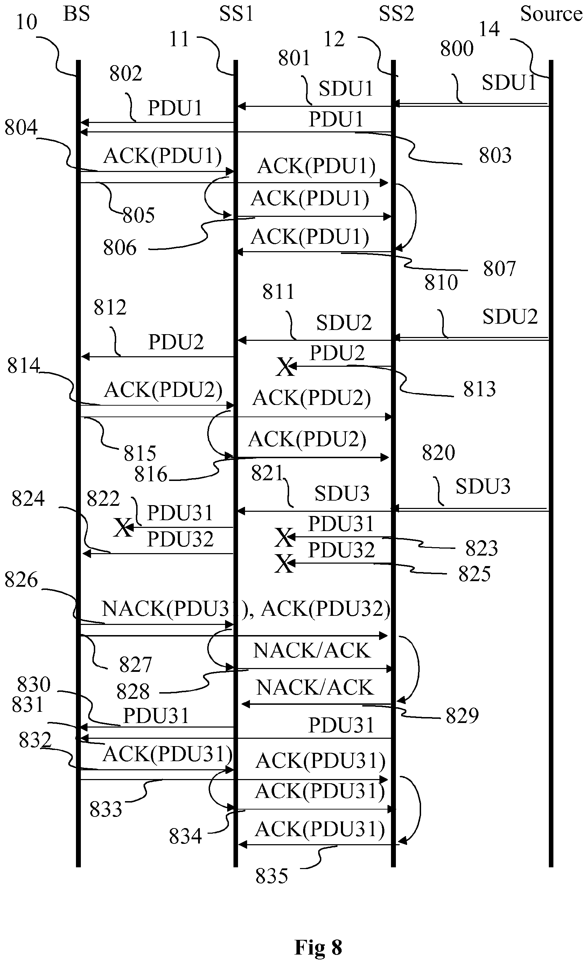

La **figure 8** illustre un exemple de communication entre la station de base 10, les stations clientes 11 et 12 et la source 14 (ces éléments sont représentés par des traits verticaux ; des actions, événements et/ou transmissions successifs sont illustrés chronologiquement). Afin de faciliter la lecture de l'exemple, seules deux stations clientes 11 et 12 sont mentionnées. L'exemple peut être extrapolé à un nombre quelconque de stations de base et de stations clientes.

La source 14 transmet des signaux 800 et 801 comprenant un SDU à chacune des stations clientes 11 et 12. A titre illustratif, c'est la même source 14 qui reçoit ou transmet les données en provenance ou à destination de la station de base 10. Selon la figure 8, les SDUs sont transmis aux stations clientes sous forme de trames distinctes avec une adresse destinataire correspondant à une SS unique (unicast). Selon une variante, les signaux 800 et 801 sont avantageusement confondus en un seul signal (signal diffusé vers toutes les SS (multicast)).

Ensuite, les SSs 11 et 12 transmettent les PDUs correspondants (respectivement 802 et 803) à la station de base 10. Afin de faciliter la lecture du schéma, on suppose que les PDU correspondant à la SDU 800 ou 801 sont transmis en une seule salve.

Selon un premier scénario, on suppose que les PDUs 802 et 803 sont reçus correctement par la station de base 10. Ils sont donc acquittés par la station de base 10 qui transmet un acquittement positif (804 et 805) à chacune des SSs. Chaque acquittement positif ou négatif transmis par la station de base aux SSs comprend le CID et le numéro du ou des PDUs (avec, si nécessaire, une indication d'acquittement sélectif ou cumulatif). Selon la figure 8, les acquittements sont transmis aux stations clientes sous forme de trames distinctes avec une adresse destinataire correspondant à une SS unique (unicast). Selon une variante, les signaux 804 et 805 sont avantageusement confondus en un seul signal (signal diffusé vers toutes les SS (multicast)) qui comprend les CIDs et le numéro du ou des PDUs.

Ensuite, selon une variante mettant en oeuvre des échanges d'acquittements entre les SSs, la station 11 (respectivement 12) transmet aux autres SS un acquittement 806 (respectivement 807) à la réception de l'acquittement 804 (respectivement 805) transmis par la BS. Chaque acquittement positif ou négatif transmis par une SS à une autre SS comprend le numéro du ou des PDUs (avec, si nécessaire, une indication d'acquittement sélectif ou cumulatif).

Selon un deuxième scénario, la source 14 transmet des signaux 810 et 811 comprenant un SDU à chacune des stations clientes 11 et 12.

Ensuite, les SSs 11 et 12 transmettent les PDUs correspondants (respectivement 812 et 813) à la station de base 10. On suppose que seul le PDU 812 est reçu correctement par la station de base 10. Il est donc acquitté par la station de base 10 qui transmet un acquittement positif à chacune des SSs (respectivement 814 et 815). Ainsi, même si la salve 813 n'est pas reçue par la station de base 10, cette salve contenant le même PDU que la salve 812, un acquittement de ce PDU est transmis à la SS 12.

On suppose que les acquittements 814 et 815 sont bien reçus par la SS respectivement 11 et 12. Dans un mode de réalisation ne mettant pas en oeuvre d'échanges entre SS et si l'acquittement 815 n'est pas reçu par la SS 12, la SS 12 va retransmettre le PDU présent dans la salve 803 jusqu'à l'expiration d'une temporisation, un nombre maximal de transmissions effectuées ou la réception d'un acquittement positif (cas non illustré en figure 8).

Ensuite, selon une variante mettant en oeuvre des échanges d'acquittements entre les SSs, la station 11 transmet aux autres SS un acquittement 816 à la réception de l'acquittement 814 transmis par la BS.

Selon un troisième scénario, la source 14 transmet des signaux 820 et 821 comprenant un SDU (SDU3) à chacune des stations clientes 11 et 12.

Ce SDU est découpé en PDU transmis dans des salves distinctes (PDU31 et PDU32) par les SSs. Les SS transmettent d'abord des salves respectivement 822 et 823 comprenant un premier ensemble d'un ou de plusieurs PDUs (PDU31) extraits de la SDU reçue (SDU3) puis des salves respectivement 824 et 825 comprenant un deuxième ensemble d'un ou de plusieurs PDUs (PDU32) extraits de la SDU reçue (SDU3).

A titre illustratif, on suppose que seule la salve 824 est correctement reçue par la station 10. La station de base 10 transmet alors un acquittement positif pour le deuxième ensemble de PDU (PDU32) et négatif pour le premier ensemble de PDU (PDU31) dans une salve 826 (respectivement 827) à la SS 11 (respectivement 12).

En supposant les acquittements bien reçus, selon une variante mettant en oeuvre des échanges d'acquittements entre les SSs, la station 11 (respectivement 12) transmet aux autres SS un acquittement 828 (respectivement 829) à la réception de l'acquittement 826 (respectivement 827) transmis par la BS.

Les SSs transmettent alors à la station de base 10 à nouveau des salves 830 et 831 comprenant le premier ensemble de PDUs acquittés négativement (PDU31). En supposant ces salves bien reçues, elles sont acquittées d'une manière similaire au premier scénario avec des salves 822 et 823 (puis des trames 834 et 835 selon la variante).

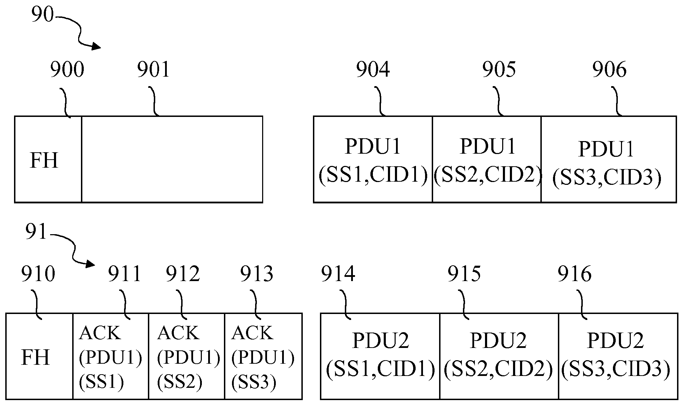

La **figure 9** illustre chronologiquement l'émission et la réception de trames successives 90 et 91. La trame 90 (respectivement 91) est divisée en deux intervalles correspondant respectivement au sens descendant (en anglais « downlink »), station de base vers SS et au sens montant (en anglais « uplink »), SS vers station de base.

L'intervalle 90 comprend :
- une partie réservée aux entêtes de trames dans des intervalles de temps attribués à chaque BS ;
- une partie réservée à la transmission de données vers la ou les SS connectées dans des intervalles de temps attribués à chaque BS ;
- une partie (non illustrée) permettant des échanges en mode contention (notamment pour permettre aux SS non associées ou non connectées de le faire) ; et
- une partie réservée à la transmission de données vers la BS depuis les SS connectées, dans des intervalles de temps attribués à chaque SS.

Dans la première partie de l'intervalle 90, la station de base émet ou reçoit d'abord une entête de trame ou FH (de l'anglais « frame header) 900. L'attribution des intervalles pour les FH est quelconque (par exemple déterminé en fonction de l'adresse MAC des BS ou de l'ordre de déclaration dans le réseau). Lorsqu'une SS s'associe à une BS, la BS recevant la demande d'association alloue de façon non équivoque des ressources temporelles pour la transmission et/ou la réception de paquets de données. Une ressource temporelle est attribuée à une seule SS. Un CID est associé à chaque connexion montante ou descendante entre une SS et une BS. Ainsi, chaque CID identifie précisément une connexion entre une SS et une BS ainsi que le sens descendant ou montant (deux connexions distinctes ont donc un CID différent). Selon une variante, le CID est le même pour le sens montant et descendant.

Ensuite, la station de base émet une trame 901 vers les SSs.

Puis, chacune des SS 12, 13 et 14 transmet successivement une salve respectivement 904 à 906 contenant le même PDU (PDU1) vers la station de base.

La trame suivante 91 comprend également un entête 910 similaire à l'entête 900.

Puis, la trame 91 comprend des acquittements 911 à 913 du ou des PDUs bien reçus par la station de base 10, à chacune des SSs respectivement 11 à 14. Selon une variante non illustrée, les acquittements sont regroupés en une seule salve adressée en « multicast » à toutes les SSs.

Ensuite, chacune des SS 12, 13 et 14 transmet successivement une salve respectivement 914 à 916 contenant le même PDU (PDU2) vers la station de base.

Bien entendu, l'invention ne se limite pas aux modes de réalisation décrits précédemment.

En particulier, l'architecture des stations mobiles et des stations de base peut être différente de celle illustrées en figures 2 et 3, dans la fonction respective et/ou la forme des éléments (les fonctions des éléments électroniques peuvent notamment être regroupées dans un nombre restreint de composants ou, au contraire, éclatés dans plusieurs composants) et leur agencement.

L'invention n'est pas limitée à une architecture telle que décrite en regard de la figure 1 mais concerne toute architecture mettant en oeuvre un réseau sans fil à couverture locale (par exemple de quelques dizaines de mètres) ou distante (par exemple de quelques kilomètres selon notamment une norme IEEE 802.16) avec une ou plusieurs SS, chaque SS étant reliée à tout instant à au moins une BS. Selon une variante, la liaison entre les SS et/ou entre les SS et le noeud source est une liaison sans fil (liaison locale ou distante).

L'invention peut également s'appliquer avec des protocoles de communications différents de ceux décrits précédemment. Ainsi, les données applicatives et/ou de contrôle peuvent être transmises selon un protocole quelconque (par exemple avec un accès à contention ou en mode scrutation) sur les liens sans fil. Les canaux de communications entre les SS et les BS peuvent utiliser les mêmes canaux fréquentiels pour les sens montant et descendant (mode dit « half duplex ») ou des canaux fréquentiels différents (mode dit « full duplex »). Le réseau ou les liens reliant la source aux SSs peut également être quelconque et n'est pas limité à un réseau Ethernet. Il s'agit, par exemple, d'un protocole standardisé ou propriétaire, filaire ou sans fil permettant la transmission de données de la source vers chacune des SSs.

Par ailleurs, les paquets (SDU) transmis par une source aux stations clientes sont avantageusement et pas nécessairement découpés en petits paquets (PDU) de niveau MAC. Dans les exemples donnés précédemment les frontières entre SDU et PDU coïncident. Selon des variantes de l'invention, elles ne coïncident pas. Selon d'autres variantes, un PDU peut correspondre à un ou plusieurs SDUs.

Les stations clientes sont avantageusement des stations quelconques compatibles avec la norme IEEE 802.16. Selon des variantes de l'invention, elles comprennent une partie liée aux échanges sans fil compatibles avec la norme IEEE 802.16 et une partie dédiée visant à améliorer la qualité de service (par exemple, une partie permettant de gérer des acquittements échangés entre stations clientes).

L'architecture de la station de base est également non limitée aux exemples décrits précédemment. En particulier, selon différents modes de réalisation, la partie applicative de la station de base (par exemple, unité de traitement de données (notamment voix et/ou images), unité de contrôle d'une caméra, ...) peut être intégrée dans un équipement comprenant la partie radio et gestion des communications sur le lien sans fil avec les stations clientes, ou, au contraire, séparée complètement ou en partie de cet équipement. Selon un mode particulier de réalisation, la partie applicative de la station de base est dans un appareil séparé de la partie communication avec les SS : par exemple, la BS reçoit un flux vidéo transmis sur Ethernet (ou sur une liaison filaire autre ou sans-fil, suivant un protocole standard ou propriétaire) vers un enregistreur numérique, un écran ou un ordinateur.

De même, l'architecture des stations clientes est également non limitée aux exemples décrits précédemment. En particulier, selon différents modes de réalisation, la source de données (par exemple, unité de traitement de données (notamment voix et/ou images), unité de contrôle de l'application associée à la ou aux stations de base, ...) peut être intégrée dans un équipement comprenant la partie radio et gestion des communications sur le lien sans fil avec la station de base, ou, au contraire, séparée complètement ou en partie de cet équipement.

Selon une variante de l'invention, un même PDU n'est pas transmis par toutes les SSs mais par un sous-ensemble (par exemple, par une ou plusieurs SSs dont la liaison est de bonne qualité avec la BS (typiquement les SSs dont les PDUs sont bien reçus par la BS)). Avantageusement, pour chaque PDU bien reçu par la BS, la BS transmet à chacune des SSs un acquittement positif, et éventuellement un acquittement négatif dans le cas où un PDU n'a pas été bien reçu. Dans ce cas, selon cette variante, chacune des SS transmet ou retransmet le ou les PDU non acquittés positivement.

Selon une variante de réalisation de l'invention, une SS peut être temporairement enlevée du sous-ensemble de SS communicant avec la BS (si, par exemple la liaison sans fil est mauvaise, la liaison filaire étant maintenue) réintroduite ultérieurement (par exemple lorsque la liaison redevient satisfaisante) après une resynchronisation des fenêtres ARQ.

L'invention peut avantageusement être combinée avec l'invention couverte par la demande de brevet français FR0755233 déposée le 24 mai 2007 par Thomson Licensing et intitulée « Procédé de réception de paquets de données et procédé de transmission correspondant » ou par la demande de brevet internationale correspondante. Dans une architecture similaire au réseau de la figure 1, cette dernière prévoit la transmission de paquets de données par une BS vers des SS. Chaque paquet de données est ainsi transmis sur plusieurs liaisons entre la BS et les SS. Chaque SS transmet à la BS un acquittement indiquant qu'elle a bien reçu le paquet correspondant. Lorsqu'un paquet n'a pas été acquitté par au moins une SS, la BS le transmet à nouveau vers les SS. En particulier, la BS et les SS du réseau de la figure 1 peuvent avantageusement mettre en oeuvre à la fois une transmission et une réception combinant l'invention couverte par la présente demande et l'invention couverte par la demande mentionnée ci-avant.

## Revendications

1. Procédé de réception de paquets de données, chaque paquet de données (PDU) étant transmis par au moins deux stations clientes (11 à 13) à destination d'une station de base (10), lesdites au moins deux stations clientes (11 à 13) appartenant à un ensemble comprenant plusieurs stations clientes, **caractérisé en ce que** le procédé comprend :
- une transmission (44) par ladite station de base (10) d'au moins un premier acquittement (804, 805) de chaque paquet de données, ledit paquet étant reçu au moins une fois correctement, ledit au moins un premier acquittement étant transmis à chaque station cliente desdites au moins deux stations clientes (11 à 13), et
- une transmission par au moins une station cliente desdites au moins deux stations clients (11 à 13) d'au moins un deuxième acquittement (806, 807) aux autres stations clients desdites au moins deux stations clientes (11 à 13) à réception dudit au moins un premier acquittement (804, 805),
les paquets de données étant issus d'au moins un paquet d'unité de service (SDU), la découpe et la numérotation dudit au moins un paquet de données par chacune desdites au moins deux stations clientes (11 à 13) étant identiques.

2. Procédé selon la revendication 1, **caractérisé en ce qu'**il comprend une requête de retransmission d'au moins un paquet de données à au moins une desdites au moins deux stations clientes, lorsque ledit ou lesdits paquets de données n'ont pas été reçus correctement.

3. Procédé selon la revendication 2, **caractérisé en ce qu'**il comprend une requête de retransmission (45) d'au moins un paquet de données à chacune desdites au moins deux stations clientes, lorsque ledit ou lesdits paquets de données n'ont pas été reçus correctement.

4. Procédé selon l'une quelconque des revendications 1 à 3, **caractérisé en ce que** ledit ou lesdits paquets de données sont dans la couche de communication contrôle d'accès au médium appelée couche MAC.

5. Procédé selon l'une quelconque des revendications 1 à 4, **caractérisé en ce qu'**il comprend une étape d'assemblage (52) de plusieurs paquets reçus en un paquet d'unité de service.

6. Procédé selon l'une quelconque des revendications 1 à 5, **caractérisé en ce que** chaque paquet de données est transmis sur une liaison sans fil entre les stations clientes et la station de base.

7. Procédé selon la revendication 6, **caractérisé en ce que** chaque paquet de données est transmis suivant un protocole IEEE 802.16 entre les stations clientes et la station de base.

8. Procédé selon l'une quelconque des revendications précédentes, caractérisé en qu'il comprend une transmission à un appareil d'au moins un paquet de service comprenant les données correspondant à au moins un paquet de données reçu, ledit au moins un paquet de service comprenant des informations de contrôle dudit appareil.

9. Procédé selon l'une quelconque des revendications précédentes, caractérisé en qu'il comprend une transmission à un appareil d'au moins un paquet de service comprenant les données correspondant à au moins un paquet de données reçu, ledit appareil étant adapté à capturer de données audiovisuelles.

10. Procédé selon l'une quelconque des revendications précédentes, caractérisé en qu'il comprend une détection d'une perte de synchronisation dans la numérotation des paquets de données reçus et la transmission d'un message de resynchronisation de la numérotation des paquets.

11. Procédé selon l'une quelconque des revendications précédentes, comprenant en outre une création d'au moins une connexion entre ladite station de base (10) et chacune desdites au moins deux deuxièmes stations (11 à 13), les connexions étant créées avec les mêmes paramètres.

12. Procédé de transmission de paquets de données vers une station de base (10), chaque paquet étant transmis par au moins deux stations clientes (11 à 13) à destination d'une station de base (10), **caractérisé en ce que** le procédé comprend :
- une découpe (72) d'au moins un paquet d'unité de données de service (SDU) en au moins un paquet de données (PDU) par lesdites au moins deux stations clientes (11 à 13), la découpe et la numérotation dudit au moins un paquet de données étant identiques dans chacune desdites au moins deux stations clientes (11 à 13) ;
- une transmission (73) dudit au moins un paquet de données à destination de ladite station de base (10) ;
- une réception (74) d'un premier acquittement d'au moins un paquet de données transmis, ledit premier acquittement étant transmis par ladite station de base (10) à destination de chaque station cliente desdites au moins deux stations clientes (11 à 13) ; et
- une transmission par une station cliente desdites au moins deux stations clients (11 à 13) d'au moins un deuxième acquittement (806, 807) aux autres stations clientes desdites au moins deux stations clients (11 à 13) à réception dudit au moins un premier acquittement (804, 805).

13. Procédé selon la revendication 10, **caractérisé en ce qu'**il comprend la réception d'un message de resynchronisation de numérotation de paquets de données, et une réinitialisation de la numérotation de paquets de données en fonction dudit message de resynchronisation.

## Patentansprüche

1. Verfahren zum Empfang von Datenpaketen, wobei jedes Datenpaket (PDU) durch mindestens zwei Kundenstationen (11 bis 13) hin zu einer Basisstation (10) übertragen wird, wobei die besagten mindestens zwei Kundenstationen (11 bis 13) zu einer Einheit gehören, die mehrere Kundenstationen umfasst, **dadurch gekennzeichnet, dass** das Verfahren umfasst:
- eine Übertragung (44) durch die besagte Basisstation (10) von mindestens einer ersten Bestätigung (804, 805) von jedem Datenpaket, wobei das besagte Paket mindestens einmal korrekt erhalten wird, wobei die besagte mindestens eine erste Bestätigung an jede Kundenstation der besagten mindestens zwei Kundenstationen (11 bis 13) übertragen wird, und
- eine Übertragung durch mindestens eine Kundenstation der besagten mindestens zwei Kundenstationen (11 bis 13) von mindestens einer zweiten Bestätigung (806, 807) an die anderen Kundenstationen der besagten mindestens zwei Kundenstationen (11 bis 13) bei Erhalt der besagten mindestens einen ersten Bestätigung (804, 805),
wobei die Datenpakete aus mindestens einem Paket von Serviceeinheit (SDU) kommen, wobei der Zuschnitt und die Nummerierung des besagten mindestens einen Datenpakets durch jede der besagten mindestens zwei Kundenstationen (11 bis 13) identisch sind.

2. Verfahren nach Anspruch 1, **dadurch gekennzeichnet, dass** es eine Neusendungsanforderung von mindestens einem Datenpaket an mindestens eine der besagten mindestens zwei Kundenstationen umfasst, wenn das oder die Datenpakete nicht fehlerfrei empfangen wurden.

3. Verfahren nach Anspruch 2, **dadurch gekennzeichnet, dass** es eine Neusendungsanforderung (45) von mindestens einem Datenpaket an jede der besagten mindestens zwei Kundenstationen umfasst, wenn das oder die Datenpakete nicht fehlerfrei empfangen wurden.

4. Verfahren nach einem der Ansprüche 1 bis 3, **dadurch gekennzeichnet, dass** sich das oder die Datenpakete in der Kommunikationssteuerungsschicht des Medienzugriffs, als MAC-Schicht bezeichnet, befinden.

5. Verfahren nach einem der Ansprüche 1 bis 4, **dadurch gekennzeichnet, dass** es einen Schritt zum Zusammensetzen (52) von mehreren in einem Serviceeinheit-Paket empfangenen Paketen umfasst.

6. Verfahren nach einem der Ansprüche 1 bis 5, **dadurch gekennzeichnet, dass** jedes Datenpaket über eine drahtlose Verbindung zwischen den Kundenstationen und der Basisstation übertragen wird.

7. Verfahren nach Anspruch 6, **dadurch gekennzeichnet, dass** jedes Datenpaket nach einem Protokoll IEEE 802.16 zwischen den Kundenstationen und der Basisstation übertragen wird.

8. Verfahren nach einem der vorstehenden Ansprüche, **dadurch gekennzeichnet, dass** es eine Übertragung an ein Gerät von mindestens einem Servicepaket umfasst, das die Daten umfasst, die mindestens einem empfangenen Datenpaket entsprechen, wobei das besagte mindestens eine Servicepaket Steuerungsinformationen des besagten Gerätes umfasst.

9. Verfahren nach einem der vorstehenden Ansprüche, **dadurch gekennzeichnet, dass** es eine Übertragung an ein Gerät von mindestens einem Servicepaket umfasst, das die Daten umfasst, die mindestens einem empfangenen Datenpaket entsprechen, wobei das besagte Gerät geeignet ist, um audiovisuelle Daten zu erfassen.

10. Verfahren nach einem der vorstehenden Ansprüche, **dadurch gekennzeichnet, dass** es die Feststellung eines Synchronisationsverlustes in der Nummerierung der empfangenen Datenpakete und die Übertragung einer Meldung zur Resynchronisation der Nummerierung der Pakete umfasst.

11. Verfahren nach einem der vorstehenden Ansprüche, des Weiteren umfassend eine Schaffung von mindestens einer Verbindung zwischen der besagten Basisstation (10) und jeder der besagten mindestens zwei zweiten Stationen (11 bis 13), wobei die Verbindungen mit denselben Parametern erschaffen werden.

12. Verfahren zur Übertragung von Datenpaketen an eine Basisstation (10), wobei jedes Paket durch mindestens zwei Kundenstationen (11 bis 13) hin zu einer Basisstation (10) übertragen wird, **dadurch gekennzeichnet, dass** das Verfahren umfasst:
- einen Zuschnitt (72) von mindestens einem Paket von Servicedateneinheit (SDU) in mindestens ein Datenpaket (PDU) durch die besagten mindestens zwei Kundenstationen (11 bis 13), wobei der Zuschnitt und die Nummerierung des besagten mindestens einen Datenpakets in jeder der besagten mindestens zwei Kundenstationen (11 bis 13) identisch sind;
- eine Übertragung (73) des besagten mindestens einen Datenpakets hin zu der besagten Basisstation (10);
- einen Empfang (74) einer ersten Bestätigung von mindestens einem übertragenen Datenpaket, wobei die besagte erste Bestätigung durch die besagte Basisstation (10) hin zu jeder Kundenstation der besagten mindestens zwei Kundenstationen (11 bis 13) übertragen wird, und
- eine Übertragung durch eine Kundenstation der besagten mindestens zwei Kundenstationen (11 bis 13) von mindestens einer zweiten Bestätigung (806, 807) an die anderen Kundenstationen der besagten mindestens zwei Kundenstationen (11 bis 13) bei Empfang der besagten mindestens einen ersten Bestätigung (804, 805).

13. Verfahren nach Anspruch 10, **dadurch gekennzeichnet, dass** es den Empfang einer Meldung zur Resynchronisation von Nummerierung von Datenpaketen umfasst, und ein Zurücksetzen der Nummerierung von Datenpaketen in Abhängigkeit von der besagten Meldung zur Resynchronisation.

## Claims

1. Method for receiving data packets, each data packet (PDU) being sent via at least two client stations (11 to 13) to a base station (10), said at least two client stations (11 to 13) belonging to a group comprising several client stations, **characterised in that** the method comprises:
- a transmission (44) via said base station (10) of at least a first acknowledgement (804, 805) of each data packet, said packet being received at least once correctly, said at least first acknowledgement being sent to each client station of said at least two client stations (11 to 13), and
- a transmission via at least one client station of said at least two client stations (11 to 13) of at least a second acknowledgement (806, 807) to the other client stations of said at least two client stations (11 to 13) upon receipt of said at least a first acknowledgement (804, 805),
the data packets being from at least one service packet unit (SDU), the division and numbering of said at least one data packet by each of said at least two client stations (11 to 13) being identical.

2. Method according to claim 1, **characterised in that** it comprises a retransmission request for at least one data packet to at least one of said at least two client stations, when said data packet or packets have not been correctly received.

3. Method according to claim 2, **characterised in that** it comprises a retransmission request (45) for at least one data packet to each of said at least two client stations, when said data packet or packets have not been correctly received.

4. Method according to any one of claims 1 to 3, **characterised in that** said data packet or packets are in the medium access control communication layer called the MAC layer.

5. Method according to any one of claims 1 to 4, **characterised in that** it comprises a step of assembly (52) of several packets received in a service packet unit.

6. Method according to any one of claims 1 to 5, **characterised in that** each data packet is transmitted on a wireless link between the client stations and the base station.

7. Method according to claim 6, **characterised in that** each data packet is transmitted according to an IEEE 802.16 protocol between the client stations and the base station.

8. Method according to any of the previous claims, **characterised in that** it comprises a transmission to a device of at least one service packet comprising the data corresponding to at least one received data packet, said at least one service packet comprising control information of said device.

9. Method according to any one of the previous claims, **characterised in that** it comprises a transmission to a device of at least one service packet comprising the data corresponding to at least one received data packet, said device being adapted for the capture of audiovisual data.

10. Method according to any one of the previous claims, **characterised in that** it comprises a detection of a loss in synchronization in the numbering of data packets received and the transmission of a packet numbering re-synchronization message.

11. Method according to any one of the previous claims, also comprising a creation of at least one connection between said base station (10) and each one of said at least two second stations (11 to 13), the connections being created with the same parameters.

12. Method for the transmission of data packets to a base station (10), each packet being transmitted by at least two client stations (11 to 13) to a base station (10), **characterised in that** the method comprises:
- a division (72) of at least one service data unit packet (SDU) into at least one data packet (PDU) by said at least two client stations (11 to 13), the division and numbering of said at least one data packet being identical in each of said at least two client stations (11 to 13);
- a transmission (73) of said at least one data packet to said base station (10);
- a receipt (74) of a first acknowledgement of at least one transmitted data packet, said first acknowledgement being transmitted by said base station (10) to each client station of said at least two client stations (11 to 13); and
- a transmission via a client station of said at least two client stations (11 to 13) of at least a second acknowledgement (806. 807) to the other client stations of said at least two client stations (11 to 13) upon receipt of said at least a first acknowledgement (804, 805).

13. Method according to claim 10, **characterised in that** it comprises the receipt of a data packet numbering resynchronization message, and a re-initialization of the data packet numbering according to said resynchronization message.
